# EUROPÄISCHE PATENTANMELDUNG

(11) **EP 2 058 355 A1**
(43) Veröffentlichungstag der Anmeldung: **13.05.2009**
(21) Anmeldenummer: 07021691.6
(22) Anmeldetag: 08.11.2007
(51) Int. Cl.: C08G 77/458, C08G 18/10

(54) **Polysiloxanmodifizierte Polyisocyanate**

(71) Anmelder: Bayer MaterialScience AG, 51368 Leverkusen (DE)
(72) Erfinder: Nennemann, Arno Dr., 51469 Bergisch Gladbach (DE); Mechtel, Markus Dr., 51467 Bergisch Gladbach (DE); Klimmasch, Thomas, 51379 Leverkusen (DE); Niesten, Meike Dr., 51061 Köln (DE)

(57) **Zusammenfassung**

Die vorliegende Erfindung betrifft neuartige modifizierte Polyisocyanate enthaltend hydroxyfunktionelle Polydimethylsiloxanbausteine sowie deren Verwendung in Beschichtungsmitteln und Klebstoffen.

## Beschreibung

Die vorliegende Erfindung betrifft neuartige modifizierte Polyisocyanate enthaltend hydroxyfunktionelle Polydimethylsiloxanbausteine sowie deren Verwendung in Beschichtungsmitteln und Klebstoffen.

US20070032623 beschreibt Polyisocyanatmischungen, welche durch Umsetzung von Polyisocyanaten mit Siloxanen, welche kohlenstoffgebundene Hydroxylgruppen aufweisen. Diese eignen sich als Vernetzer zur Herstellung von Beschichtungen mit niedriger Oberflächenspannung.

Aus WO2007025671 sind Zusammensetzungen bekannt, welche spezielle OH-gruppenfunktionelle Polydimethylsiloxane sowie Polyole oder Polyamine und Polyisocyanate enthalten. Je nach Applikationstechnik eignen sich diese jedoch nicht zur Herstellung von trübungsfreien Lackfilmen mit guten easy-to-clean-Eigenschaften. Eine direkte Umsetzung von Polyisocyanaten mit diesen speziellen Siloxanen und deren Einsatz als Polyisocyanatvernetzer wird ferner nicht beschrieben.

Überraschend wurde nun gefunden, dass ausgehend von WO2007025671 durch Umsetzung von solchen OH-funktionellen Polydimethylsiloxanen mit Polyisocyanaten vergelungsfreie polysiloxanhaltige Polyisocyanate hergestellt werden konnten, die im Beschichtungsprozeß mit Polyhydroxyverbindungen dann eine homogenere Filmbildung sowie verbesserte anwendungstechnische Eigenschaften im Vergleich zur Formulierung über das Polyol zeigen.

Gegenstand der vorliegenden Erfindung ist daher ein Verfahren zur Herstellung siloxanmodifizierter Polyisocyanate, bei dem
A) Polyisocyanate mit
B) hydroxylgruppenhaltigen Siloxanen mit zahlenmittleren Molekulargewichten von 200 bis 3000 g/mol und einer mittleren OH-Funktionalität von größer oder gleich 1,8 gemäß Formel (I) 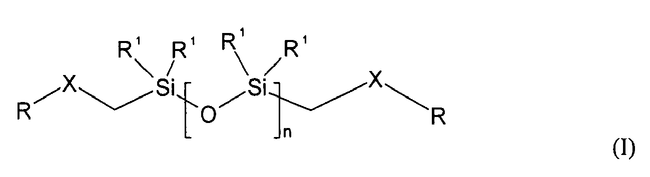
   - X: ein aliphatischer, gegebenenfalls verzweigter, gegebenenfalls Ethergruppen ent- haltender C₁ bis C₂₀-Rest,
   - R: hydroxyfunktioneller Rest,
   - R¹: Wasserstoff oder ein gegebenenfalls heteroatomhaltiger C₁ bis C₂₀- Kohlenwasserstoffrest und
   - n: 1 bis 40 ist
C) gegebenenfalls Blockierungsmitteln
umgesetzt werden.

Ebenfalls ein Gegenstand der Erfindung sind Polyurethansysteme enthaltend solche siloxanmodifizierten Polyisocyanate und wenigstens ein Polyol oder Polyamin.

In A) können grundsätzlich alle dem Fachmann an sich bekannten NCO-funktionellen Verbindungen mit mehr als einer NCO-Gruppe pro Molekül eingesetzt werden. Diese weisen bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-% auf.

Solche Polyisocyanate sind durch Modifizierung einfacher aliphatischer, cycloaliphatischer, araliphatischer und/oder aromatischer Diisocyanate zugänglich und können Uretdion-, Isocyanurat-, Allophanat-, Biuret-, Iminooxadiazindion- und/oder Oxadiazintrionstrukturen aufweisen. Außerdem können solche Polyisocyanate als NCO-gruppenhaltige Prepolymere eingesetzt werden. Derartige Polyisocyanate sind beispielsweise in Laas et al. (1994), J. prakt. Chem. 336, 185-200 oder in Bock (1999), Polyurethane für Lacke und Beschichtungen, Vincentz Verlag, Hannover, S. 21-27, beschrieben.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethylcyclohexan (Isophorondiisocyanat, IPDI), 4,4'- Diisocyanato-dicyclohexylmethan, 1-Isocyanato-1-methyl-4(3)isocyanatomethylcyclohexan, Bis-(isocyanatomethyl)-norboman, 1,3- und 1,4-Bis-(1-isocyanato-1- methyl-ethyl)-benzol (TMXDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugt werden in A) Polyisocyanate der vorstehend genannten Art auf Basis von IPDI, MDI, TDI, HDI oder deren Gemischen eingesetzt. Besonders bevorzugt werden aliphatische Polyisocyanate auf Basis von HDI und IPDI eingesetzt

Die in B) einzusetzenden hydroxylgruppenhaltigen Polydimethylsiloxane sind erhältlich, indem entsprechende epoxyfunktionelle Polydimethylsiloxane mit hydroxyalkylfunktionellen Aminen vorzugsweise in einem stöchiometrischen Verhältnis von Epoxygruppe zu Aminofunktion umgesetzt werden.

Die dazu eingesetzten epoxyfunktionellen Siloxane weisen bevorzugt 1 bis 4, besonders bevorzugt 1 bis 2 Epoxygruppen pro Molekül auf. Ferner haben sie zahlenmittlere Molekulargewichte von bevorzugt 150 bis 2800 g/mol, besonders bevorzugt 250 bis 2000 g/mol, ganz besonders bevorzugt 250 bis 1500 g/mol.

Bevorzugte epoxyfunktionelle Siloxane sind α,ω-Epoxysiloxane entsprechend der Formel (II) mit den vorstehenden Molekulargewichten und im Mittel 2 Epoxyfunktionen pro Molekül. Solche Produkte sind beispielsweise von Momentive, Leverkusen, Deutschland, oder Tego, Essen, Deutschland als Tegomer^{®} E-Si2330 bzw. Coatosil^{®} 2810 erhältlich. 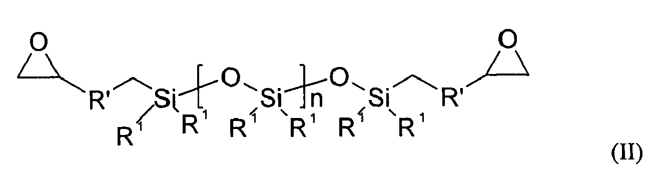 wobei
- R': ein gegebenenfalls verzweigter aliphatischer C₁- bis C₁₀-Rest,
- R¹: Wasserstoff oder ein gegebenenfalls heteroatomhaltiger C₁ bis C₂₀-Kohlenwasserstoffrest und
- n: eine ganze Zahl von 1 bis 25 ist.

Die eingesetzten Hydroxyalklyamine entsprechen der Formel (III) 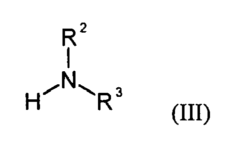 wobei
- R²: ein linearer, verzweigter oder cyclischer Hydroxyalkylrest mit 1 bis 10 Kohlenstoffatomen ist und
- R³: Wasserstoff, Alkyl-, Cycloalkyl, Aralkyl oder der Definition des Restes R² entspricht.

Bevorzugte Hydroxyalkylamine sind Ethanolamin, Propanolamin, Diethanolamin, Dipropanolamin, Ethylethanolamin, Propylethanolamin und Cyclohexyl-ethanolamin. Besonders bevorzugt sind Diethanolamin, Alkylethanolamin und Cyclohexylethanolamin. Ganz besonders bevorzugt ist Diethanolamin.

Zur Herstellung der erfindungswesentlichen modifizierten Siloxane der Komponente B) wird das epoxyfunktionelle Siloxan der vorstehend genannten Art gegebenenfalls in einem Lösemittel vorgelegt und dann mit der erforderlichen Menge des Hydroxyalkylamins oder einer Mischung mehrerer Hydroxyalkylamine umgesetzt. Die Reaktionstemperatur beträgt typischerweise 20 bis 150 °C und wird solange geführt, bis keine freien Epoxygruppen mehr nachweisbar sind.

Ein alternativer Weg zur Herstellung der erfindungswesentlichen Polydimethylsiloxane ist die Umsetzung hydroxyalkylfunktioneller Siloxandiole mit cyclischen Lactonen.

Dies geschieht in einem Verhältnis von OH-Gruppen zu Lactonfunktionen von 1:2 bis 2:1, bevorzugt in einem stöchiometrischen Verhältnis von OH-Gruppen zu Lactonfunktionen.

Die dazu eingesetzten hydroxyalkylfunktionellen Siloxane (α, ω-Carbinole) haben bevorzugt zahlenmittlere Molekulargewichte von 150 bis 2800 g/mol, besonders bevorzugt 250 bis 2000 g/mol, ganz besonders bevorzugt 250 bis 1500 g/mol. Ein Beispiel ist Baysilone OF-OH 502 6%ig (Fa. GE-Bayer Silicones, Leverkusen, Deutschland).

Bevorzugt ist R in Formel (I) ein hydroxyfunktioneller Carbonsäureester der Formel 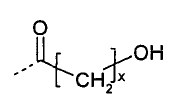 wobei x = 3 bis 5, bevorzugt 5 ist,
oder eine hydroxyalkylfunktionelle Aminogruppe der Formel 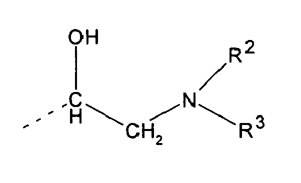 wobei
- R²: ein aliphatischer linearer, verzweigter oder cyclischer Hydroxyalkylrest
- R³: Wasserstoff oder entsprechend der Definition des Restes R² ist.

Besonders bevorzugt ist R in Formel (I) eine hydroxyalkylfunktionelle Aminogruppe der vorgenannten Art.

R¹ in den Formeln (I) und (II) ist bevorzugt Phenyl-, Alkyl-, Aralkyl-, Fluoralkyl-, Alkylethylencopropylenoxidgruppen oder Wasserstoff, wobei Phenyl und Methyl besonders bevorzugt sind. Es ist dabei unerheblich, ob es sich bei den Resten R1 um gleiche oder verschiedene Gruppen handelt.

Ganz besonders bevorzugt ist R1 eine Methylgruppe, so dass es sich um reine Dimethylsilyleinheiten handelt.

Bevorzugt haben die wie vorstehend beschrieben erhältlichen hydroxylgruppenhaltigen Siloxane der Komponente B) zahlenmittlere Molekulargewichte von 250 bis 2250 g/mol, besonders bevorzugt 250 bis 1500 g/mol.

Bei der Modifizierung beträgt das Verhältnis von freien NCO-Gruppen des zu modifizierenden Isocyanats zu den NCO-reaktiven OH-Gruppen des hydroxylgruppenhaltigen Siloxans der Formel (I) bevorzugt 1 : 0,001 bis 1 : 0,4, besonders bevorzugt 1 : 0,01 bis 1 : 0,2.

Im Anschluss an die Siloxan-Modifizierung können die freien NCO-Gruppen der so modifizierten Polyisocyanate noch weitergehend modifiziert werden. Dies kann beispielsweise eine partielle oder vollständige Blockierung der freien NCO-Gruppen mit dem Fachmann an sich bekannten Blockierungsmitteln sein (zur Blockierung von Isocyanatgruppen siehe DE-A 10226927, EP-A 0 576 952, EP-A 0 566 953, EP-A 0 159 117, US-A 4 482 721, WO 97/12924 oder EP-A 0 744 423). Beispielsweise zu nennen sind Butanonoxim, ε-Caprolactam, Methyl-ethyl-ketoxim, Malonsäureester, sekundäre Amine sowie Triazol- und Pyrazolderivate.

Eine Blockierung der NCO-Gruppen hat den Vorteil, dass die darauf basierenden siloxanmodifizierten Polyisocyanate eine tendenziell bessere Stabilität gegen Vergelung aufweisen als analoge Produkte, welche noch freie NCO-Gruppen besitzen. Dies trifft insbesondere bei Reaktionsverhältnissen NCO : OH von 1 : 0,1 bis 1 : 0,4 zu.

Die Reaktion von hydroxyfunktionellem Polydimethylsiloxan und Polyisocyanat erfolgt bei 0 - 100 °C, bevorzugt bei 10 - 90 °C, besonders bevorzugt bei 15 - 80 °C. Gegebenenfalls können gängige Katalysatoren eingesetzt werden, die die Reaktion R-OH mit NCO katalysieren.

Im erfindungsgemäßen Verfahren können prinzipiell zu jedem Zeitpunkt die dem Fachmann an sich bekannten gegenüber NCO-Gruppen inerten Lösemittel zugesetzt werden. Beispielsweise sind dies Lösungsmittel wie Butylacetat, 1-Methoxy-2-propylacetat, Ethylacetat, Toluol, Xylol, Solventnaphta sowie deren Mischungen.

Polyurethansysteme die solche wie vorstehend beschrieben modifizierten Polyisocyanate enthalten können je nach dem, ob die NCO-Gruppen blockiert sind, als 1- oder 2-Komponenten-PUR-Systeme formuliert werden.

Neben den erfindungsgemäßen polysiloxanmodifizierten Polyisocyanaten enthalten die Polyurethansysteme der vorliegenden Erfindung Polyhydroxy- und/oder Polyaminverbindungen zur Vernetzung. Daneben können noch weitere von den erfindungsgemäßen Polyisocyanaten verschiedene Polyisocyanate sowie Hilfs- und Zusatzstoffe enthalten sein.

Geeignete Polyhydroxylverbindungen sind beispielsweise tri- und/oder tetrafunktionelle Alkohole und/oder die in der Beschichtungstechnologie an sich üblichen Polyetherpolyole, Polyesterpolyole und/oder Polyacrylatpolyole.

Ferner können zur Vernetzung auch Polyurethane oder Polyharnstoffe, die aufgrund der in den Urethan- bzw. Harnstoffgruppen vorliegenden aktiven Wasserstoffatome mit Polyisocyanaten vernetzbar sind, eingesetzt werden.

Ebenfalls möglich ist der Einsatz von Polyaminen, deren Aminogruppen blockiert sein können, wie Polyketimine, Polyaldimine oder Oxazolane.

Bevorzugt werden zur Vernetzung der erfindungsgemäßen Polyisocyanate Polyacrylatpolyole und Polyesterpolyole eingesetzt.

Als Hilfs- und Zusatzstoffe können Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid oder beliebige Gemische solcher Lösungsmittel verwendet werden. Bevorzugte Lösungsmittel sind Butylacetat, 2-Ethylacetat und Diacetoalkohol.

Ferner können als Hilfs- und Zusatzstoffe wie anorganische oder organische Pigmente, Lichtschutzmittel, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und Katalysatoren enthalten sein.

Die Applikation des erfindungsgemäßen Polyurethansysteme auf Substrate erfolgt nach den in der Beschichtungstechnologie üblichen Applikationsverfahren, wie z. B. Spritzen, Fluten, Tauchen, Schleudern oder Rakeln.

Die erfindungsgemäßen polysiloxanmodifizierten Polyisocyanate sowie die darauf basierenden Polyurethansysteme eignen sich für die Herstellung von Polyurethanklebstoffen, Polyurethanlacken und Polyurethanbeschichtungen.

### Beispiele

Desmophen^{®} A 870 Polyacrylatpolyol, 70 % in Butylacetat, OH-Zahl 97, OH-Gehalt 2,95 %, Viskosität bei 23 °C ca. 3500 mPas, Handelsprodukt der BayerMaterialScience AG, Leverkusen, DE

Desmodur^{®} N 3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Desmodur^{®} VP LS 2253: 3,5-Dimethylpyrazol-blockiertes Polyisocyanat (Trimerisat) auf Basis HDI; 75 % in SN 100/MPA (17:8), Viskosität bei 23°C ca. 3600 mPas, blockierter NCO-Gehalt 10,5 %, Equivalentgewicht 400, Bayer MaterialScience AG, Leverkusen, DE

Baysilone OF/OH 502 6%ig: Organofunktionelles Polydimethylsiloxan, OH-Gehalt 5,5 bis 6,5 %, GE-Bayer Silicones (Momentive), Leverkusen, DE.

Coatosil^{®} 2810: Epoxy-modifizierte Siliconflüssigkeit, Epoxid-Gehalt 11,4Gew.-%, Momentive Performance Materials, Leverkusen, DE

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Pendeldämpfung (König) nach DIN EN ISO 1522 "Pendeldämpfungsprüfung"

Kratzfestigkeit Laborwaschanlage (Nassverkratzung) nach DIN EN ISO 20566 "Beschichtungsstoffe - Prüfung der Kratzfestigkeit eines Beschichtungssystems mit einer Laborwaschanlage"

### Bestimmung der Lösemittelbeständiskeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemitteln Xylol, 1-Methoxypropylacetat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugfähigen Papiers oder Textilgewebe entfernt. Man mustert nun sofort die Prüffläche nach behutsamem Kratzen mit dem Fingernagel visuell auf Veränderungen ab. Folgende Stufen werden unterschieden:

| | |
|---|---|
| 0 = unverändert | |
| 1 = Spur verändert | nur sichtbare Veränderung |
| 2 = gering verändert | mit Fingernagel spürbare Erweichung feststellbar |
| 3 = merklich verändert | mit dem Fingernagel starke Erweichung feststellbar |
| 4 = stark verändert | mit dem Fingernagel bis zum Untergrund |
| 5 = zerstört | ohne Fremdeinwirkung Lackoberfläche zerstört |

Die gefundenen Bewertungsstufen für die oben angegebenen Lösemittel werden in der folgenden Reihenfolge dokumentiert:

| | | |
|---|---|---|
| Beispiel | 0000 | (keine Veränderung) |
| Beispiel | 0001 | (sichtbare Veränderung nur bei Aceton) |

Dabei beschreibt die Zahlenreihenfolge die Reihenfolger der ausgetesteten Lösungsmittel (Xylol, Methoxypropylacetat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt, an dessen flacher Seite Stahlwolle oder Polishing Paper befestigt werden. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden.

### Beispiel 1a: hydroxyfunktionelles Polydimethylsiloxan

Entsprechend WO 2007025670 wurden 770 g des epoxyfunktionellen Polydimethylsiloxans Coatosil^{®} 2810 der Formel 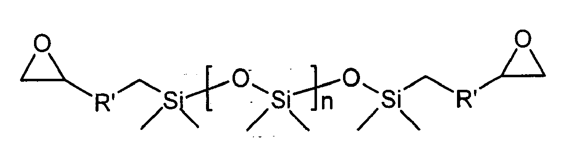 vorgelegt, auf 80 °C vorgeheizt und mit 231 g Diethanolamin (Valverhältnis Epoxid / Amin 1:1) versetzt. Diese Mischung wurde anschließend 2 Stunden bei 100°C gerührt. Das Produkt hatte einen Epoxidgehalt < 0,01 %, eine OH-Zahl von ca. 365 mg KOH/g (11,1 %) und eine Viskosität bei 23°C von ca. 2900 mPas.

### Beispiel 1b - 1c

Analog zu Beispiel 2a wurde die Umsetzung des Bisepoxids mit verschiedenen Aminen durchgeführt. Die Epoxidgehalte lagen nach Abklingen der Reaktion < 0,01 %. Teilweise wurde die Synthese in Gegenwart von Butylacetat durchgeführt.

| **Beispiel** | **Amin** | **Butylacetat** | **OH-Zahl** |
|---|---|---|---|
| | | [%] | **[mg KOH/g]** |
| 1a | Diethanolamin | - | 365 |
| 1b | 2-Ethylaminoethanol | - | 249 |
| 1c | Cyclohexylaminoethanol | 25 | 116 |

### Beispiel 1d

438 g (2 val) des PDMS-Bishydroxids Tegomer H-Si2111 (OH-Gehalt 3,9 %, Molmasse 876 g/mol; Degussa AG, Essen, DE) wurden mit 57 g Caprolacton (1 val) und 0,05 % w/w DBTL gemischt und bei 150 °C 6 h gerührt. Es wurde ein transparentes Produkt mit einer OH-Zahl von 113 mg KOH/g erhalten.

### Beispiel 2a: erfindungsgemäßes, polysiloxanmodifiziertes Polyisocyanat

In einer Standard-Rührapparatur wurden 321,1 g (1 val) Desmodur^{®} N3300 in 250 g Butylacetat bei 80 °C vorgelegt und 2 1/h Stickstoff übergeleitet. Anschließend wurde 51,28 g (0,2 val) des Siloxanblockcopolyols aus Beispiel 1 bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt. Nach Überprüfung des theoretischen NCO-Gehaltes wurde auf RT abgekühlt und in ca. 15 min 127,59 g (0,8 val) des Blockierungsmittels 3,5-Dimethylpyrrazol (DMP) hinzugegeben unter Regelung der Temperatur auf maximal 40 °C. Die Temperatur wurde solange bei 40 °C gehalten, bis der NCO-peak im IR-Spektrometer verschwunden war.

Man erhielt ein klares blockiertes Polyisocyanat mit folgenden Kennzahlen: Feststoffgehalt 49,6 Gew.-% sowie 6,5 % blockierter NCO-Gehalt bezogen auf DMP. Die Lagerstabilität bei Raumtemperatur lag bei > 3 Monaten.

### Beispiel 2b: erfinduneseemäßes, polysiloxanmodifiziertes Polyisocyanat

In einer Standard-Rührapparatur wurden 492,1 g (1 val) Desmodur^{®} N3300 in 250 g Butylacetat bei 80 °C vorgelegt und 2 1/h Stickstoff übergeleitet. Anschließend wurde 7,86 g (0,02 val) des Siloxanblockcopolyols aus Beispiel 2a bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt.

Man erhielt ein klares polysiloxanmodifiziertes Polyisocyanat mit folgenden Kennzahlen: Feststoffgehalt 50,3 Gew.-% sowie 10,4 % NCO-Gehalt. Die Lagerstabilität bei Raumtemperatur lag bei > 3 Monaten.

### Beispiel 2c: Vereleichsbeispiel, polysiloxanmodifiziertes Polyisocyanat

In einer Standard-Rührapparatur wurden 295,8 g (1 val) Desmodur^{®} N3300 in 250 g Butylacetat bei 80 °C vorgelegt und 2 1/h Stickstoff übergeleitet. Anschließend wurde 86,6 g (0,2 val) Baysilone OF/OH 502 (OH-Gehalt 6 %) bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt. Nach Überprüfung des theoretischen NCO-Gehaltes wurde auf RT abgekühlt und in ca. 15 min 117,6 g (0,8 val) des Blockierungsmittels 3,5-Dimethylpyrrazol (DMP) hinzugegeben unter Regelung der Temperatur auf maximal 40 °C. Die Temperatur wurde solange bei 40 °C gehalten, bis der NCO-peak im IR-Spektrometer verschwunden war.

Man erhielt ein klares, polysiloxanmodifiziertes, blockiertes Polyisocyanat mit folgenden Kennzahlen: Feststoffgehalt 48,6 Gew.-% sowie 6,14 % blockierter NCO-Gehalt bezogen auf DMP.

### Beispiel 3a: Vereleichsbeispiel, siloxanmodifiziertes Polyol

In einer Standard-Rührapparatur wurden zu 496,5 g Desmophen A 870BA 3,5 g des Siloxanblockcopolyols aus Beispiel 2a bei 80 °C zugegeben, bis es gut gelöst war. Man erhielt ein farbloses, lagerstabiles Polyol (> 3 Monate) mit einem OH-Gehalt von 3,1 %, einem Siloxanblockcopolyolgehalt von 1 % fest auf fest und einem Feststoffgehalt von 70,9 %.

### Beispiel 3b: Vereleichsbeispiel, siloxanmodifiziertes Polyol

In einer Standard-Rührapparatur wurden zu 482,2 g Desmophen A 870BA 17,8 g des Siloxanblockcopolyols aus Beispiel 2a bei 80 °C zugegeben, bis es gut gelöst war. Man erhielt ein farbloses, lagerstabiles Polyol (> 3 Monate) mit einem OH-Gehalt von 3,4 %, einem Siloxanblockcopolyolgehalt von 5 % fest auf fest und einem Feststoffgehalt von 71,7%.

### Anwendungstechnische Ausprüfung der erfindungsgemäßen, siloxanmodifizierten Polyisocyanate:

Die erfindungsgemäßen Polyisocyanate aus Beispiel 2a und 2b wurden mit Desmophen^{®} A870 BA in den Verhältnissen NCO/OH von 1,0 sowie 0,1% Baysilone OL 17 (fest/BM fest. 10 %-ige Lösung in MPA), 2,0% BYK 070 (Lff./BM fest), 1,0% Tinuvin 123 (Lff./BM fest), 1,5% Tinuvin 384-2 (Lff./BM fest) und 0,5 % DBTL (fest/BM fest, 10 %-ige Lösung in MPA) als Lackadditive abgemischt und gut verrührt. Die Festkörper der Lacke lagen zwischen 40 und 50 % und wurden gegebenenfalls mit einem Lösemittelgemisch MPA/SN 1:1 eingestellt. Bis zur Verarbeitung wurde der Lack noch 10 min. entlüftet. Der Lack wurde dann mit einer Fließbecherpistole in 1,5 Kreuzgängen auf den vorbereiteten Untergrund appliziert (3,0-3,5 bar Druckluft, Düse: 1,4-1,5 mm Ø, Abstand Düse-Substrat: ca. 20-30 cm). Nach einer Ablüftzeit von 15 min. wurde der Lack bei 140°C für 30 min. eingebrannt. Die Trockenschichtdicke betrug jeweils 40-50 µm.

Zum Vergleich wurde ein konventionelles Lacksystem aus Desmophen^{®} A 870 und Desmodur^{®} VP LS 2253 sowie Lacksysteme enthaltend siloxanmodifizierte Polyole aus den Vergleichsbeispielen 3a und 3b formuliert und analog appliziert.

Die Ergebnisse des erfindungsgemäßen, siloxanhaltigen Polyisocyanats aus Beispiel 2a sowie des Vergleichs sind in Tabelle 1 dargestellt.

**Tabelle 1 Vergleich der lacktechnologischen Eigenschaften**

| | **16** | **8** | **10** |
|---|---|---|---|
| **Polyisocyanat** | **Desmodur VP LS 2253** | **Beispiel 2a** | **Beispiel 2c** |
| **Polyol** | **A 870 BA** | **A 870 BA** | **A 870 BA** |
| **Visuelle Beurteilung des Lackfilmes** | i.O. | i.O. | Benetzungsprobleme |
| **Pendeldämpfung n. König** [s] | 174 | 165 | 95 |
| **Lösemittelbeständigkeit** | | | |
| (X/MPA/EA/Ac)[Note]¹⁾ nach 5 min. | | | |
| | 3344 | 2244 | 4455 |
| **Kratzfestigkeit** ***(Hammertest + Stahlwolle)*** | | | |
| Ausgangsglanz 20° | 88,0 | 87,1 | 86,7 |
| Relativer Restglanz n. Reflow, 2 h 60°C [%] | 45,8 | 83,1 | 66,4 |

Während die erfindungsgemäßen, polysiloxanmodifizierten Polyisocyanate aus Beispiel 2a und 2b Filme mit gutem Verlauf bildeten, zeigten mit herkömmlichen OH-haltigen Polysiloxanbausteinen modifizierte Polyisocyanate starke Benetzungsprobleme. Des weiteren zeigte das erfindungsgemäße polysiloxanmodifzierte Polyisocyanat eine verbesserte Lösemittelbeständigkeit sowie Kratzfestigkeit (relativer Restglanz nach Reflow). Mit herkömmlichen Polysiloxanbausteinen modifizierte Polyisocyanate zeigten deutliche Verschlechterung der Pendelhärte sowie der Lösemittelbeständigkeit, auch gegenüber dem Standard.

### Vergleich der lacktechnologischen Eigenschaften mit WO2007025671

In Beispiel 3a und 3b wurden die höherfunktionellen hydroxyalkylfunktionellen Polydimethylsiloxane analog WO2007025671 vorab mit dem Polyol vermischt, diese dann vor der Applikation mit dem Polyisocyanat vermischt und dann versprüht und nicht gerakelt, wie in WO 2007/025671 beschrieben. Im Unterschied zu WO 2007/025671 wurden nach der Spritzapplikation Filme mit starken Benetzungsfehlern erhalten (nicht charakterisierbar), Wurde hingegen das Polysiloxanpolyol erfindungsgemäß vorher mit dem Polyisocyanat umgesetzt ("Prepolymeransatz"), so ließ sich eine vernünftige Spritzapplikation durchführen die zu verbesserten Filmeigenschaften führte (siehe Tabelle 1).

## Patentansprüche

1. Verfahren zur Herstellung siloxanmodifizierter Polyisocyanate, bei dem
A) Polyisocyanate mit
B) hydroxylgruppenhaltigen Siloxanen mit zahlenmittleren Molekulargewichten von 200 bis 3000 g/mol und einer mittleren OH-Funktionalität von größer oder gleich 1,8 gemäß Formel (I) 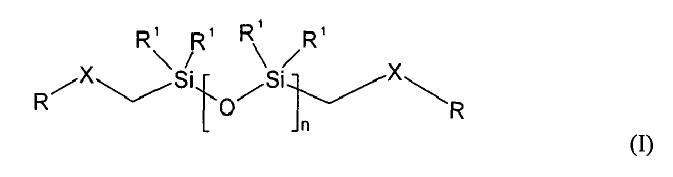
X ein aliphatischer, gegebenenfalls verzweigter, gegebenenfalls Ethergruppen ent- haltender C₁ bis C₂₀-Rest,
R hydroxyfunktioneller Rest,
R¹ Wasserstoff oder ein gegebenenfalls heteroatomhaltiger C₁ bis C₂₀- Kohlenwasserstoffrest und
n 1 bis 40 ist und
C) gegebenenfalls Blockierungsmitteln
umgesetzt werden.

2. Verfahren gemäß Anspruch 1, **dadurch gekennzeichnet, dass** in A) Polyisocyanate mit Uretdion-, Isocyanurat-, Allophanat-, Biuret-, Iminooxadiazindion- und/oder Oxadiazintrionstrukturen eingesetzt werden.

3. Verfahren gemäß Anspruch 1 oder 2, **dadurch gekennzeichnet, dass** in A) Polyisocyanate auf Basis von IPDI, MDI, TDI, HDI oder deren Gemischen eingesetzt werden.

4. Verfahren gemäß einem der Ansprüche 1 bis 3, **dadurch gekennzeichnet, dass** in Formel (I) R ein hydroxyfunktioneller Carbonsäureester der Formel 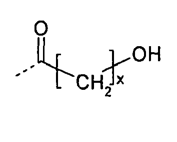 wobei x = 3 bis 5, bevorzugt 5 ist,
oder eine hydroxyalkylfunktionelle Aminogruppe der Formel 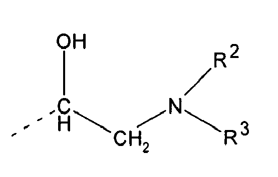 wobei
R² ein aliphatischer linearer, verzweigter oder cyclischer Hydroxyalkylrest
R³ Wasserstoff oder entsprechend der Definition des Restes R² ist.

5. Verfahren gemäß einem der Ansprüche 1 bis 4, **dadurch gekennzeichnet, dass** R¹ in Formel (I) eine Phenyl- oder Methylgruppe ist.

6. Verfahren gemäß einem der Ansprüche 1 bis 5, **dadurch gekennzeichnet, dass** das Verhältnis von freien NCO-Gruppen des zu modifizierenden Polyisocyanats zu den NCO-reaktiven OH-Gruppen des hydroxylgruppenhaltigen Siloxans der Formel (I) 1 : 0,001 bis 1 : 0,4 beträgt.

7. Verfahren gemäß einem der Ansprüche 1 bis 6, **dadurch gekennzeichnet, dass** die noch freien NCO-Gruppen in Schritt C) blockiert werden.

8. Verfahren gemäß einem der Ansprüche 1 bis 7, **dadurch gekennzeichnet, dass** die Umsetzung von A) mit B) in Abwesenheit von über B) hinausgehenden Verbindungen mit 2 oder mehr Hydroxylgruppen durchgeführt wird.

9. Siloxangruppenhaltige Polyisocyanate erhältlich nach einem Verfahren gemäß einem der Ansprüche 1 bis 8.

10. Polyurethansysteme umfassend siloxangruppenhaltige Polyisocyanate gemäß Anspruch 9.

11. Polyurethansysteme gemäß Anspruch 10, **dadurch gekennzeichnet, dass** diese zur Vernetzung Polyhydroxy- und/oder Polyaminverbindungen sowie gegebenenfalls Hilfs- und Zusatzstoffe enthalten.

12. Polyurethanklebstoffe, Polyurethanlacke und Polyurethanbeschichtungen erhältlich unter Verwendung von siloxangruppenhaltigen Polyisocyanaten gemäß Anspruch 9.
